# EUROPEAN PATENT SPECIFICATION

(11) **EP 4 500 609 B1**
(45) Date of publication and mention of the grant of the patent: **10.12.2025**
(21) Application number: 23713658.5
(22) Date of filing: 23.03.2023
(51) Int. Cl.: H01M 8/04537, H01M 8/04858, H01M 16/00, H01M 8/0432, H01M 8/04992

(54) **A METHOD FOR CONTROLLING OPERATION OF A FUEL CELL SYSTEM, FCS, AND AN ELECTRICAL ENERGY STORAGE SYSTEM, EES**
VERFAHREN ZUM STEUERN DES BETRIEBS EINES BRENNSTOFFZELLENSYSTEMS, FCS UND ELEKTRISCHES ENERGIESPEICHERSYSTEM, EES
PROCÉDÉ DE COMMANDE DU FONCTIONNEMENT D'UN SYSTÈME DE PILE À COMBUSTIBLE, FCS, ET SYSTÈME DE STOCKAGE D'ÉNERGIE ÉLECTRIQUE, EES

(30) Priority: 28.03.2022 EP 22164802
(43) Date of publication of application: 05.02.2025
(73) Proprietor: Volvo Truck Corporation, 405 08 Göteborg (SE)
(72) Inventor: ARYA, Pranav, 437 42 Lindome (SE); KLÜPPEL SMIJTINK, Rafael, 417 47 Göteborg (SE)
(74) Representative: Kransell & Wennborg KB
(86) International application number: PCT/EP2023/057520
(87) International publication number: WO 2023/186706

(56) References cited:
- SE-C2- 541 804
- US-A1- 2018 134 170
- ALYAKHNI AHMAD ET AL: "A Comprehensive Review on Energy Management Strategies for Electric Vehicles Considering Degradation Using Aging Models", IEEE ACCESS, IEEE, USA, vol. 9, 15 October 2021 (2021-10-15), pages 143922 - 143940, XP011885021, DOI: 10.1109/ACCESS.2021.3120563

## Description

### TECHNICAL FIELD

The invention relates to a method for controlling operation of a fuel cell system, FCS, and an electrical energy storage system, EES. The invention also relates to a control unit, a propulsion system, a vehicle, a computer program and a computer readable medium. The invention can be applied in heavy-duty vehicles, such as trucks, buses and construction equipment. Although the invention will be described with respect to a truck, the invention is not restricted to this particular vehicle, but may also be used in other vehicles such as wheel loaders, excavators, dump trucks, passenger cars etc.

### BACKGROUND

There are many different techniques for generating propulsive force for a vehicle. One such technique is to use electric power for driving one or more electric machines of the vehicle. The electric machines can be powered by use of an electrical energy storage system, e.g. a battery comprising a plurality of battery cells, such as lithium ion cells. In addition, the electric machines can also be powered by use of a fuel cell system. Prior art document US 2018/134170 discloses a vehicle propulsion system and corresponding operation method of controlling.

A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles.

A fuel cell system and an electrical energy storage system which are used in combination for e.g. powering a vehicle are prone to degradation during use. The degradation negatively affects the service life of the systems. As such, it is of high importance to try to reduce the amount of degradation for the systems, thereby increasing the service life.

In view of the above, there is a strive to increase the service life of such systems and the present invention is directed towards the situation when a fuel cell system and an electrical energy storage system are used for providing power.

### SUMMARY

Thus, an object of the invention is to provide an improved method for controlling operation of a fuel cell system, FCS, and an electrical energy storage system, EES. In particular, an object of the invention is to provide a method in which at least the service life of the FCS is increased. Additionally, or alternatively, an object of the invention is to provide a method in which the service life of the combined system is increased. Other objects of the invention are to provide an improved control unit, propulsion system, vehicle, computer program and computer readable medium.

According to a first aspect of the invention, at least one of the objects is at least partly achieved by a method according to claim 1.

Thus, there is provided a method for controlling operation of a fuel cell system, FCS, and an electrical energy storage system, EES. The FCS is adapted to be operated with an adjustable set of operating constraints which are adjustable between soft constraints and hard constraints, wherein operating the FCS with hard constraints is associated with a higher expected degradation of the FCS than an expected degradation when operating the FCS with soft constraints.

The method comprises:
- estimating an actual state of health of the FCS and an actual state of health of the EES which are associated with a common point in time,
- determining an expected state of health of the FCS and an expected state of health of the EES which are associated with the common point in time, wherein the expected states of health are based on historical use conditions of the FCS and of the EES, respectively, and
- controlling operation of the FCS and of the EES based on a deviation between the actual state of health and the expected state of health of the FCS and the EES, respectively, such that,
when the actual state of health of the FCS is worse than its expected state of health and the actual state of health of the EES is better than its expected state of health, the FCS is operated with soft constraints.

By the provision of a method as disclosed herein, at least the service life of the FCS may be extended. This is accomplished by operating the FCS with the soft constraints as mentioned in the above, thereby resulting in that the EES will be used more compared to if the FCS was to be operated with the hard constraints instead. For example, the present invention is based on a realization that an expected state of health based on historical use conditions of the respective systems are not always the same as the actual state of health. A reason for this is that it may be difficult to assess the real operating conditions of the systems. Therefore, depending on the actual operating conditions during use, i.e. during operation, the systems may degrade less or more than expected. As such, by controlling operation based on the above-mentioned deviations, an unexpected degradation of the FCS which is higher than an expected degradation based on the historical use conditions can be managed by allowing the EES to be used more compared to if the FCS operates with the hard constraints. As a result, the service life of the combined system may be extended since the service life of the combined system is based on the service life of the weakest system.

Being associated with a common point in time means herein that the actual and expected states of health of the systems relate to a common point in time during operation. Being related to a common point in time may not necessarily mean that the states of health are estimated/determined for the same point in time, but may additionally, or alternatively, mean that the states of health are estimated/determined for different points in time which are less than a maximum time period from each other. For example, the maximum time period may be 5 hours (h), such as 4 h, 3 h, 2 h, 1 h, 0.5 h, or less. In view of the foregoing, by way of example, the estimated actual state of health of the FCS and the estimated actual state of health of the EES may relate to the same, or similar point(s) in time. As another example, the estimated actual state of health of the FCS and the determined expected state of health of the FCS may relate to the same, or similar, point(s) in time. As yet another example, the estimated actual state of health of the EES and the determined expected state of health of the EES may relate to the same, or similar, point(s) in time. Similar points in time may accordingly mean that the time points are less than a maximum time period from each other.

Operating the FCS with soft constraints typically means that the FCS is operated with lower operating dynamics and/or in a narrower operating window compared to if the FCS is operated with hard constraints. By operating dynamics of a system is herein meant how the operation of the system is varied over time. For example, large and/or rapid variations of an operating parameter during use represents higher operating dynamics of the system compared to a situation with smaller and/or slower variations of the operating parameter. By an operating window is herein meant a window, or range, which an operating parameter is inside during use. By way of example, an operating parameter may refer to a power output from the system. As such, operating dynamics may be defined as power dynamics of the FCS, e.g. how fast the FCS can go from low power to high or full power. Other non-limiting examples of operating parameters are voltage level, ampere level and power throughput. As yet another non-limiting example, an operating parameter may relate to if a shutdown of the system is allowed or not. For example, too many shutdowns of the FCS may result in higher degradation.

Optionally, operating the FCS with soft constraints comprises operating the FCS with lower operating dynamics and/or a narrower operating window so that use of the EES is increased.

Optionally, the method further comprises controlling operation of the FCS and of the EES based on the deviation between the actual state of health and the expected state of health of the FCS and the EES, respectively, such that,
when the actual state of health of the FCS is better than its expected state of health and the actual state of health of the EES is worse than its expected state of health, the FCS is operated with hard constraints.

Thereby, the service life of the EES can be extended. Consequently, the service life of the combined system may be extended.

Optionally, operating the FCS with hard constraints comprises operating the FCS with higher operating dynamics and/or a broader operating window so that use of the EES is decreased.

Optionally, one of the FCS and the EES is a predetermined preferred system with respect to the other system, wherein the method further comprises controlling operation of the FCS and of the EES based on the deviation between the actual state of health and the expected state of health of the FCS and the EES, respectively, such that,
when the actual state of health of the FCS is worse than its expected state of health and the actual state of health of the EES is worse than its expected state of health, the FCS is operated with a set of operating constraints so that degradation of the predetermined preferred system is reduced.

Accordingly, if the actual state of health of the FCS and of the EES, respectively, is worse than expected, the degradation of the more preferred system may be reduced. For example, one of the systems, such as the FCS, may be more expensive than the other system. As such, operating the FCS so that the degradation of the more expensive system is reduced implies cost-efficiency.

Optionally, the historical use conditions of the FCS are indicative of at least one of the following:
- power output of the FCS during operation,
- power cycling frequency of the FCS during operation,
- ambient temperature conditions during operation,
- ambient air conditions during operation, such as level of pollution,
- ambient weather conditions during operation,
- start/stop history,
- history of coolant temperature in the FCS,
- operating time.

Optionally, the historical use conditions of the EES are indicative at least one of the following:
- power output of the EES during operation,
- ambient temperature conditions,
- ambient weather conditions during operation,
- power cycling and energy throughput of the EES during operation.

Optionally, the method is updated with a predetermined update frequency, such as the update frequency corresponds to a predetermined number of operating hours of the FCS and/or of the EES. Updating with a predetermined update frequency implies a more reliable method. For example, the predetermined update frequency may be set so that the deviation of the actual and expected state of health does not deviate too far. In other words, the predetermined update frequency may be set to not be too low.

Optionally, the predetermined update frequency is variable, such as variable with respect to at least one of ambient temperature conditions and ambient weather conditions. A variable update frequency implies a more flexible method, e.g. allowing the update frequency to vary with ambient conditions. For example, more harsh ambient conditions may imply the need for a higher update frequency, and vice versa.

Optionally, the predetermined update frequency is modified during operation based on a magnitude of the deviation between the actual state of health and the expected state of health of the FCS and/or of the EES, such as a larger deviation implies a higher update frequency, and vice versa. Thereby, if it for example is determined that there is a relatively large deviation between the actual state of health and the expected state of health, the update frequency may be increased. Similarly, for example, if it is determined that there is a relatively small deviation between the actual state of health and the expected state of health, the update frequency may be reduced. This implies a more flexible method.

According to a second aspect of the invention, at least one of the objects is at least partly achieved by a control unit according to claim 11.

Thus, there is provided a control unit for controlling operation of a fuel cell system, FCS, and an electrical energy storage system, EES, wherein the control unit is configured to perform the steps of the method according to any one of the embodiments of the first aspect of the invention.

Advantages and effects of the second aspect of the invention are analogous to the advantages and effects of the first aspect of the invention, and vice versa.

According to a third aspect of the invention, at least one of the objects is at least partly achieved by a propulsion system for a vehicle according to claim 12.

Thus, there is provided a propulsion system for a vehicle comprising a fuel cell system, FCS, and an electrical energy storage system, EES, and further comprising a control unit according to any one of the embodiments of the second aspect of the invention.

Advantages and effects of the third aspect of the invention are analogous to the advantages and effects of the first and second aspects of the invention, and vice versa.

According to a fourth aspect of the invention, at least one of the objects is at least partly achieved by a vehicle according to claim 13.

Thus, there is provided a vehicle comprising a propulsion system according to any one of the embodiments of the third aspect of the invention.

Advantages and effects of the fourth aspect of the invention are analogous to the advantages and effects of the first, second and third aspects of the invention, and vice versa.

According to a fifth aspect of the invention, at least one of the objects is at least partly achieved by a computer program according to claim 14.

Thus, there is provided a computer program comprising program code means for performing the steps of any of the embodiments of the first aspect of the invention when said program is run on a computer, such as on the control unit according to the second aspect of the invention.

According to a fifth aspect of the invention, at least one of the objects is at least partly achieved by a computer readable medium according to claim 15.

Thus, there is provided a computer readable medium carrying a computer program comprising program code means for performing the steps of any of the embodiments of the first aspect of the invention when said program product is run on a computer, such as on the control unit according to the second aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an embodiment of the invention,
Fig. 2 is a flowchart of a method according to an embodiment of the invention,
Fig. 3 is another flowchart of a method according to an embodiment of the invention,
Fig. 4 is a graph showing an expected and actual state of health over time, and
Fig. 5 is a schematic view of a propulsion system according to an example embodiment of the invention.

### DETAILED DESCRIPTION OF EXAMPLE EMBODIMENTS OF THE INVENTION

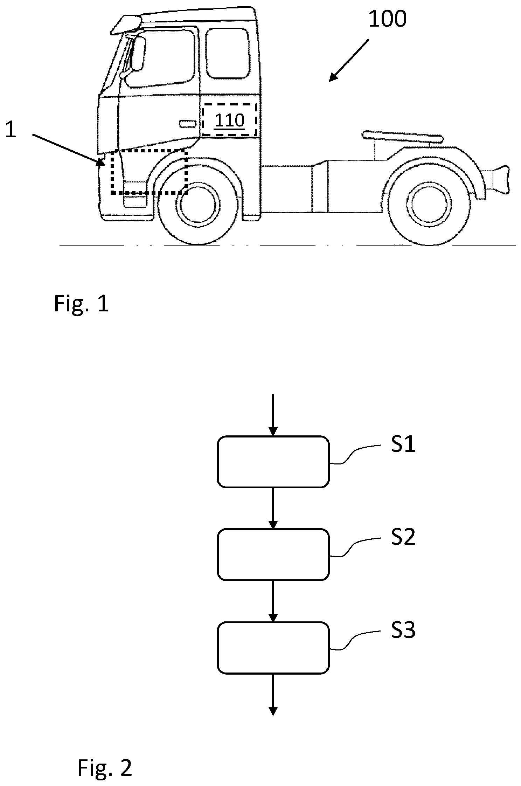

Fig. 1 depicts a vehicle 100 in the form of a heavy-duty truck. In this example, the heavy-duty truck 100 is a so-called towing vehicle which is configured to tow one or more trailers (not shown). The present invention is however not only applicable to this type of vehicle but may also be used in many other types of vehicles and vessels, such as other trucks, buses, passenger cars, construction equipment, including but not limited to wheel loaders, dump trucks, excavators etc.

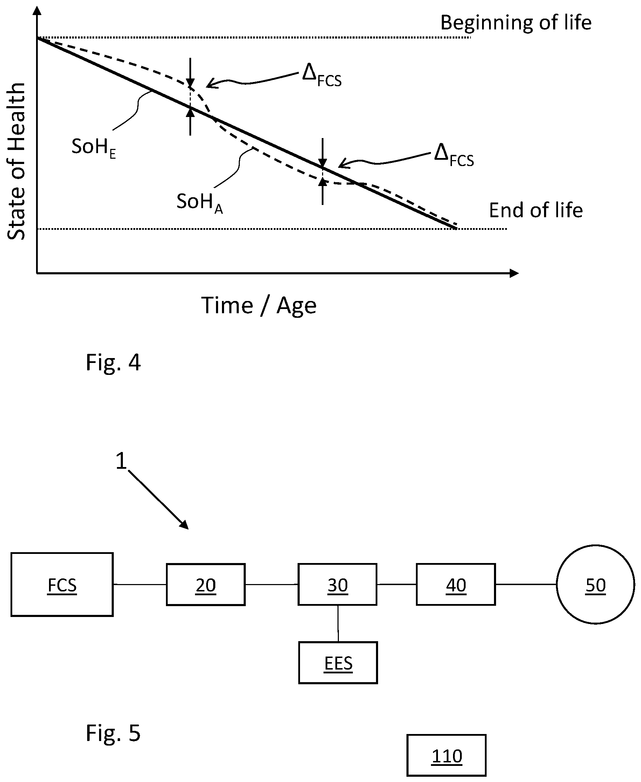

In the shown embodiment, the vehicle 100 comprises a propulsion system 1. The propulsion system 1 may for example be a propulsion system as shown in fig. 5 which will be described further in the below. The vehicle 100 further comprises a control unit 110 according to an example embodiment of the second aspect of the invention.

In particular, the propulsion system 1 comprises a fuel cell system, FCS, and an electrical energy storage system, EES. The electrical energy storage system EES may for example be a battery comprising a plurality of battery cells, such as lithium-ion cells.

**Typically,** such a propulsion system 1 for the vehicle 1 is adapted so that, during operation, the FCS contributes the most to the propulsion of the vehicle 1, whereas the EES is used to compensate for situations when the FCS can't provide, or is not suitable for providing, all of the required propulsion force.

Fig. 2 depicts a flowchart of a method according to an example embodiment of the present invention. The method controls operation of a fuel cell system, FCS, and an electrical energy storage system, EES. The FCS is adapted to be operated with an adjustable set of operating constraints which are adjustable between soft constraints and hard constraints, wherein operating the FCS with hard constraints is associated with a higher expected degradation of the FCS than an expected degradation when operating the FCS with soft constraints.

Accordingly, operating the FCS with hard constraints implies that the use of the EES is decreased during operation and operating the FCS with soft constraints implies that the use of the EES is increased during operation.

The method comprises:
S1: estimating an actual state of health of the FCS and an actual state of health of the EES which are associated with a common point in time.

For example, an actual state of health for an FCS and/or for an EES may be estimated by the so-called electrochemical impedance spectroscopy method which is well-known. There are also other methods for estimating an actual state of health, such as ESS coulomb counting for estimating degradation, polarization curve comparison between a used FCS and a new, or fresh, FCS.

The method further comprises:
S2: determining an expected state of health of the FCS and an expected state of health of the EES which are associated with the common point in time, wherein the expected states of health are based on historical use conditions of the FCS and of the EES, respectively, and
S3: controlling operation of the FCS and of the EES based on a deviation Δ_{FCS} between the actual state of health and the expected state of health of the FCS and the EES, respectively, such that,
when the actual state of health of the FCS is worse than its expected state of health and the actual state of health of the EES is better than its expected state of health, the FCS is operated with soft constraints.

For example, an expected state of health based on historical use conditions may be determined by comparing a current usage with a maximum usage. For example, the FCS may in a certain application be supposed to last for a specific amount of operating hours, such as 1000 hours. During this time it may be assumed that the degradation characteristics is known, such as linear. As such, if for example the FCS has been operated for 500 hours, then, with a linear logic, the expected state of health should be 50 %. This is a rather simple and thereby efficient approach of estimating the expected state of health. However, more advanced approaches are also feasible. For example, by taking at least one of the other below mentioned historical use conditions into account, any event that is related to degradation of the FCS, such as ambient temperature, start/stop history etc, can be considered to thereby obtain a value of the expected state of health for the common point in time which is closer to the actual state of health for the common point in time. As a consequence, the update frequency of the method may thereby be reduced.

An example of an actual and an expected state of health over time of one of the systems, in this case the FCS, is shown in fig. 4. Fig. 4 represents a graph where state of health is represented on the y-axis and where time, or age, is represented on the x-axis. The dotted curve represents the actual state of health SoH_{A} and the solid curve represents the expected state of health SoH_{E}. In the example shown, the expected state of health SoH_{E} forms an almost straight line which is based on historical use conditions of the system. A straight line may for example imply that the use conditions are substantially static during operation. For example, a power cycling frequency, ambient temperature conditions during operation etc., may not substantially vary over time. Of course, the historical use conditions may additionally, or alternatively, vary over time, resulting in a varying degradation rate over time. Thereby, the expected state of health may evidently not only be represented by a straight line. Historical use conditions as used herein may refer to any previous use conditions of the respective systems.

As mentioned in the above, step S3 comprises controlling operation of the FCS and of the EES based on a deviation Δ_{FCS} between the actual state of health SoH_{A} and the expected state of health SoH_{E} of the FCS and the EES. In fig. 4, two deviations Δ_{FCS} of the FCS are indicated. Each one of the exemplified deviations relates to a common time instant. However, as mentioned herein, there may be a time period between the respective actual and expected state of health. The second deviation, to the right in the figure, represents a situation when the actual state of health SoH_{A} of the FCS is worse than its expected state of health SoH_{E}. Accordingly, by use of the method, from this point in time, and when also the actual state of health of the EES is better than its expected state of health, the FCS is operated with soft constraints. For example, this may mean that the operation of the FCS is changed from operating with hard constraints to instead operating with soft constraints, or that the FCS, if already operating with soft constraints, continues to operate with the soft constraints. After the method has been performed at the point in time when the deviation Δ_{FCS} occurred, the degradation rate of the FCS may be reduced, i.e. by changing from operating the FCS with soft constraints instead of hard constraints.

Operating the FCS with soft constraints typically comprises operating the FCS with lower operating dynamics and/or a narrower operating window so that use of the EES is increased.

In addition, the method may further comprise controlling operation of the FCS and of the EES based on the deviation Δ_{FCS} between the actual state of health and the expected state of health of the FCS and the EES, respectively, such that,
when the actual state of health of the FCS is better than its expected state of health and the actual state of health of the EES is worse than its expected state of health, the FCS is operated with hard constraints.

The first indicated deviation Δ_{FCS} in fig. 4, i.e. to the left in the figure, may represent such a situation when the actual state of health of the FCS is better than its expected state of health and the actual state of health of the EES (not shown) is worse than its expected state of health. Accordingly, by use of the method, from this point in time, the FCS is operated with hard constraints. For example, this may mean that the operation of the FCS is changed from operating with soft constraints to instead operating with hard constraints, or that the FCS, if already operating with hard constraints, continues to operate with the hard constraints. In the shown example it can be seen that the degradation rate of the FCS is increased after the first deviation Δ_{FCS} to the left in the figure.

Operating the FCS with hard constraints typically comprises operating the FCS with higher operating dynamics and/or a broader operating window so that use of the EES is decreased.

One of the FCS and the EES may be a predetermined preferred system with respect to the other system. As such, the method may further comprise controlling operation of the FCS and of the EES based on the deviation Δ_{FCS} between the actual state of health and the expected state of health of the FCS and the EES, respectively, such that,
when the actual state of health of the FCS is worse than its expected state of health and the actual state of health of the EES is worse than its expected state of health, the FCS is operated with a set of operating constraints so that degradation of the predetermined preferred system is reduced.

The historical use conditions of the FCS may be indicative of at least one of the following:
- power output of the FCS during operation,
- power cycling frequency of the FCS during operation,
- ambient temperature conditions during operation,
- ambient air conditions during operation, such as level of pollution,
- ambient weather conditions during operation,
- start/stop history,
- history of coolant temperature in the FCS,
- operating time, such as operating hours.

The historical use conditions of the EES may be indicative of at least one of the following:
- power output of the EES during operation,
- ambient temperature conditions,
- ambient weather conditions during operation,
- power cycling and energy throughput of the EES during operation.

Moreover, the method may be updated with a predetermined update frequency, such as the update frequency corresponds to a predetermined number of operating hours of the FCS and/or of the EES. Still further, the predetermined update frequency may be variable, such as variable with respect to at least one of ambient temperature conditions and ambient weather conditions. For example, the predetermined update frequency may be modified during operation based on a magnitude of the deviation between the actual state of health and the expected state of health of the FCS and/or of the EES, such as a larger deviation implies a higher update frequency, and vice versa.

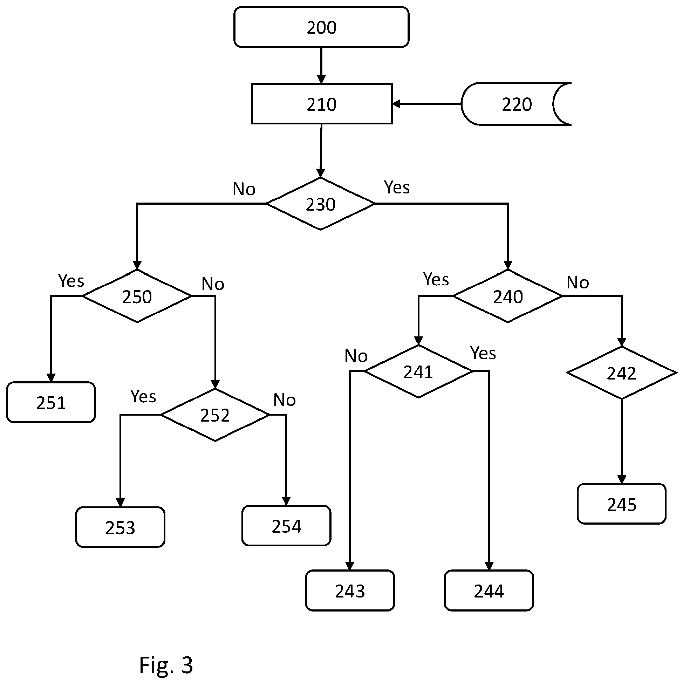

Fig. 3 depicts a flowchart of an example embodiment of the method as disclosed herein.

The method starts in box 200 where an update is requested. In box 210, the actual state of health of the FCS and the actual state of health of the EES are estimated. Box 220 represents determining the expected state of health of the FCS and the expected state of health of the EES based on historical use conditions of the FCS and of the EES. Then, the method continues to box 230 where it is determined if the actual state of health of the FCS is worse than its expected state of health. If yes, the method continues to box 240. If no, the method instead continues to box 250.

In box 240 it is determined if the actual state of health of the EES is better than its expected state of health. If yes, the method continues to box 241. If no, the method instead continues to box 242.

In box 241 it is determined whether the current operating constraints are operating with soft constraints or not. If they are not operating with soft constraints, the operation of the FCS is changed to operating the FCS with soft constraints, as represented by box 243. However, if the FCS is already operating with soft constraints, the soft constraints are kept, as represented by box 244.

In box 242 it is determined whether the current operating constraints of the FCS are lower than the hard constraints. If yes, the method is continued to box 245 where the constraints are changed, if required, so that the degradation of the predetermined preferred system is reduced.

In box 230, if it is determined that the actual state of health of the FCS is not worse than its expected state of health, the method instead continues to box 250 as mentioned in the above. In box 250, similar to box 240, it is determined if the actual state of health of the EES is better than its expected state of health. If yes, the method continues to box 251. If no, the method instead continues to box 252.

In box 251, the current operating constraints are kept. However, in box 252 it is determined if the current operating constraints of the FCS are lower than the hard constraints. If yes, the method continues to box 253 where the operating constraints are changed to the hard constraints. However, if the operating constraints are not lower than the hard constraints, the operating constraints of the FCS are kept, represented by box 254.

Fig. 5 depicts schematically a propulsion system 1 for a vehicle according to an example embodiment of the invention. The propulsion system 1 comprises a fuel cell system FCS and an electrical energy storage system EES. The propulsion system 1 may for example be part of the vehicle 100 as shown in fig. 1. In the shown embodiment, the propulsion system 1 further comprises a DC/DC converter 20, a junction box 30 and an electrical machine 40 which is drivingly connected to at least one traction wheel 50 of the vehicle 100. As such, the lines between the parts in the figure represent electrical connections, except for the line between the electrical machine 40 and the at least traction wheel 50 which instead represents a mechanical driving connection. The operation of the FCS and the EES is controlled by a control unit 110. The control unit 110 may further be used for controlling operation of the propulsion system 1, i.e. also for controlling e.g. the electrical machine. The FCS is preferably adapted to be the main contributor for providing propulsive power to the at least one traction wheel 50. Accordingly, the EES is preferably adapted to provide additional propulsive power in situations when the complete requested power cannot be provided by the FCS, or when it is not suitable to provide the complete requested power by the FCS.

The control unit 110 is herein an electronic control unit. It may comprise processing circuitry which is adapted to run a computer program as disclosed herein. The control unit 110 may comprise hardware and/or software for performing the method according to the invention. In an embodiment the control unit 110 may be denoted a computer. The control unit 110 may be constituted by one or more separate sub-control units. In addition, the control unit 110 may communicate with the propulsion system 1 by use of wired and/or wireless communication means. The control unit 110 may be part of the vehicle 100 as shown in fig. 1. Still further, even though the control unit 110 preferably is a vehicle on-board control unit, it shall be noted that the control unit may additionally or alternatively be a vehicle off-board control unit, such as a control unit being part of a computer cloud system.

It is to be understood that the present invention is not limited to the embodiments described above and illustrated in the drawings; rather, the skilled person will recognize that many changes and modifications may be made within the scope of the appended claims.

## Claims

1. A **method** for controlling operation of a fuel cell system, FCS, and an electrical energy storage system, EES, wherein the FCS is adapted to be operated with an adjustable set of operating constraints which are adjustable between soft constraints and hard constraints, wherein operating the FCS with hard constraints is associated with a higher expected degradation of the FCS than an expected degradation when operating the FCS with soft constraints, the method comprising:
- estimating (S1) an actual state of health of the FCS and an actual state of health of the EES which are associated with a common point in time, wherein the method further comprises:
- determining (S2) an expected state of health of the FCS and an expected state of health of the EES which are associated with the common point in time, wherein the expected states of health are based on historical use conditions of the FCS and of the EES, respectively, and
- controlling operation (S3) of the FCS and of the EES based on a deviation (Δ_{FCS}) between the actual state of health and the expected state of health of the FCS and the EES, respectively, such that,
when the actual state of health of the FCS is worse than its expected state of health and the actual state of health of the EES is better than its expected state of health, the FCS is operated with soft constraints.

2. The method according to claim 1, wherein operating the FCS with soft constraints comprises operating the FCS with lower operating dynamics and/or a narrower operating window so that use of the EES is increased.

3. The method according to any one of the preceding claims, further comprising controlling operation of the FCS and of the EES based on the deviation between the actual state of health and the expected state of health of the FCS and the EES, respectively, such that,
when the actual state of health of the FCS is better than its expected state of health and the actual state of health of the EES is worse than its expected state of health, the FCS is operated with hard constraints.

4. The method according to claim 3, wherein operating the FCS with hard constraints comprises operating the FCS with higher operating dynamics and/or a broader operating window so that use of the EES is decreased.

5. The method according to any one of the preceding claims, wherein one of the FCS and the EES is a predetermined preferred system with respect to the other system, wherein the method further comprises controlling operation of the FCS and of the EES based on the deviation between the actual state of health and the expected state of health of the FCS and the EES, respectively, such that,
when the actual state of health of the FCS is worse than its expected state of health and the actual state of health of the EES is worse than its expected state of health, the FCS is operated with a set of operating constraints so that degradation of the predetermined preferred system is reduced.

6. The method according to any one of the preceding claims, wherein the historical use conditions of the FCS are indicative of at least one of the following:
- power output of the FCS during operation,
- power cycling frequency of the FCS during operation,
- ambient temperature conditions during operation,
- ambient air conditions during operation, such as level of pollution,
- ambient weather conditions during operation,
- start/stop history,
- history of coolant temperature in the FCS,
- operating time.

7. The method according to any one of the preceding claims, wherein the historical use conditions of the EES are indicative of at least one of the following:
- power output of the EES during operation,
- ambient temperature conditions,
- ambient weather conditions during operation,
- power cycling and energy throughput of the EES during operation.

8. The method according to any one of the preceding claims, wherein the method is updated with a predetermined update frequency, such as the update frequency corresponds to a predetermined number of operating hours of the FCS and/or of the EES.

9. The method according to claim 8, wherein the predetermined update frequency is variable, such as variable with respect to at least one of ambient temperature conditions and ambient weather conditions.

10. The method according to any one of claims 8-9, wherein the predetermined update frequency is modified during operation based on a magnitude of the deviation between the actual state of health and the expected state of health of the FCS and/or of the EES, such as a larger deviation implies a higher update frequency, and vice versa.

11. A control unit (110) for controlling operation of a fuel cell system, FCS, and an electrical energy storage system, EES, wherein the control unit is configured to perform the steps of the method according to any one of claims 1-10.

12. A propulsion system (1) for a vehicle comprising a fuel cell system, FCS, and an electrical energy storage system, EES, and further comprising a control unit according to claim 11.

13. A vehicle (100) comprising a propulsion system according to claim 12.

14. A computer program comprising program code means for performing the steps of any of claims 1-10 when said program is run on a computer, such as on the control unit according to claim 11.

15. A computer readable medium carrying a computer program comprising program code means for performing the steps of any of claims 1-10 when said program product is run on a computer, such as on the control unit of claim 11.

## Patentansprüche

1. Verfahren zur Steuerung des Betriebs eines Brennstoffzellensystems, FCS, und eines elektrischen Energiespeichersystems, EES, wobei das FCS so angepasst ist, dass es mit einem einstellbaren Satz von Betriebsbeschränkungen betrieben werden kann, die zwischen weichen Beschränkungen und harten Beschränkungen einstellbar sind, wobei der Betrieb des FCS mit harten Beschränkungen mit einer höheren erwarteten Verschlechterung des FCS verbunden ist als eine erwartete Verschlechterung, wenn das FCS mit weichen Beschränkungen betrieben wird, das Verfahren umfassend:
- Schätzen (S1) eines tatsächlichen Gesundheitszustands des FCS und eines tatsächlichen Gesundheitszustands des EES, die mit einem gemeinsamen Zeitpunkt verbunden sind, wobei das Verfahren ferner umfasst:
- Bestimmen (S2) eines erwarteten Gesundheitszustands des FCS und eines erwarteten Gesundheitszustands des EES, die dem gemeinsamen Zeitpunkt verbunden sind, wobei die erwarteten Gesundheitszustände auf historischen Einsatzbedingungen des FCS bzw. des EES beruhen, und
- Steuerung des Betriebs (S3) des FCS und des EES auf der Grundlage einer Abweichung (AFCS) zwischen dem tatsächlichen Gesundheitszustand und dem erwarteten Gesundheitszustand des FCS bzw. der EES, so dass, wenn der tatsächliche Gesundheitszustand des FCS schlechter ist als sein erwarteter Gesundheitszustand und der tatsächliche Gesundheitszustand des EES besser ist als sein erwarteter Gesundheitszustand, wird das FCS mit weichen Beschränkungen betrieben.

2. Verfahren nach Anspruch 1, wobei der Betrieb des FCS mit weichen Beschränkungen den Betrieb des FCS mit einer geringeren Betriebsdynamik und/oder einem engeren Betriebsfenster umfasst, so dass die Nutzung des EES erhöht wird.

3. Verfahren nach einem der vorhergehenden Ansprüche, ferner umfassend die Steuerung des Betriebs des FCS und des EES auf der Grundlage der Abweichung zwischen dem tatsächlichen Gesundheitszustand und dem erwarteten Gesundheitszustand des FCS bzw. des EES, so dass, wenn der tatsächliche Gesundheitszustand des FCS besser ist als sein erwarteter Gesundheitszustand und der tatsächliche Gesundheitszustand des EES schlechter ist als sein erwarteter Gesundheitszustand, das FCS mit harten Beschränkungen betrieben wird.

4. Verfahren nach Anspruch 3, wobei der Betrieb des FCS mit harten Beschränkungen den Betrieb des FCS mit einer höher Betriebsdynamik und/oder einem breiteren Betriebsfenster umfasst, so dass die Nutzung des EES verringert wird.

5. Verfahren nach einem der vorhergehenden Ansprüche, wobei entweder das FCS oder das EES ein vorbestimmtes bevorzugtes System in Bezug auf das andere System ist, wobei das Verfahren ferner die Steuerung des Betriebs des FCS und des EES auf der Grundlage der Abweichung zwischen dem tatsächlichen Gesundheitszustand und dem erwarteten Gesundheitszustand des FCS bzw. des EES umfasst, so dass, wenn der tatsächliche Gesundheitszustand des FCS schlechter ist als sein erwarteter Gesundheitszustand und der tatsächliche Gesundheitszustand des EES schlechter ist als sein erwarteter Gesundheitszustand, das FCS mit einem Satz von Betriebsbeschränkungen betrieben wird, so dass die Verschlechterung des vorbestimmten bevorzugten Systems verringert wird.

6. Verfahren nach einem der vorhergehenden Ansprüche, wobei die historischen Einsatzbedingungen des FCS auf mindestens eines der Folgenden hinweisen:
- Leistungsabgabe des FCS während des Betriebs,
- Leistungszyklusfrequenz des FCS während des Betriebs,
- Umgebungstemperaturen während des Betriebs,
- Umgebungsluftbedingungen während des Betriebs, wie z. B. der Grad der Verschmutzung,
- Witterungsbedingungen während des Betriebs,
- Start/Stopp-Verlauf,
- Verlauf der Kühlmitteltemperatur im FCS,
- Betriebsdauer.

7. Verfahren nach einem der vorhergehenden Ansprüche, wobei die historischen Einsatzbedingungen des EES auf mindestens eines der Folgenden hinweisen:
- Leistungsabgabe des EES während des Betriebs,
- Umgebungstemperaturen,
- Witterungsbedingungen während des Betriebs,
- Leistungszyklus und Energiedurchsatz des EES während des Betriebs.

8. Verfahren nach einem der vorhergehenden Ansprüche, wobei das Verfahren mit einer vorbestimmten Aktualisierungshäufigkeit aktualisiert wird, so dass die Aktualisierungshäufigkeit einer vorbestimmten Anzahl von Betriebsstunden des FCS und/oder des EES entspricht.

9. Verfahren nach Anspruch 8, wobei die vorbestimmte Aktualisierungshäufigkeit variabel ist, z. B. variabel in Bezug auf mindestens die Umgebungstemperatur und/oder die Witterungsbedingungen.

10. Verfahren nach einem der Ansprüche 8-9, wobei die vorbestimmte Aktualisierungshäufigkeit während des Betriebs auf der Grundlage der Größe der Abweichung zwischen dem tatsächlichen Gesundheitszustand und dem erwarteten Gesundheitszustand des FCS und/oder des EES geändert wird, so dass eine größere Abweichung eine höhere Aktualisierungshäufigkeit impliziert und umgekehrt.

11. Steuereinheit (110) zur Steuerung des Betriebs eines Brennstoffzellensystems, FCS, und eines elektrischen Energiespeichersystems, EES, wobei die Steuereinheit konfiguriert ist, um die Schritte des Verfahrens nach einem der Ansprüche 1-10 durchzuführen.

12. Antriebssystem (1) für ein Fahrzeug, umfassend ein Brennstoffzellensystem, FCS, und eines elektrischen Energiespeichersystem, EES und ferner umfassend eine Steuereinheit nach Anspruch 11.

13. Fahrzeug (100) umfassend ein Antriebssystem nach Anspruch 12.

14. Computerprogramm umfassend Programmcodemittel zum Durchführen der Schritte nach einem der Ansprüche 1-10, wenn das Programm von der Steuereinheit nach Anspruch 11 ausgeführt wird.

15. Computerlesbares Medium mit einem Computerprogramm, das Programmcodemittel zum Durchführen der Schritte nach einem der Ansprüche 1-10 umfasst, wenn das Programmprodukt auf der Steuereinheit nach Anspruch 11 ausgeführt wird.

## Revendications

1. Procédé pour commander le fonctionnement d'un système de pile à combustible, FCS, et d'un système de stockage d'énergie électrique, EES, dans lequel le FCS est adapté pour fonctionner avec un ensemble réglable de contraintes de fonctionnement qui sont réglables entre des contraintes souples et des contraintes rigides, le fonctionnement du FCS avec des contraintes strictes étant associé à une dégradation attendue plus élevée du FCS qu'à une dégradation attendue lors du fonctionnement du FCS avec des contraintes douces, le procédé comprenant :
- l'estimation (S1) d'un état de santé réel du FCS et d'un état de santé réel de l'EES qui sont associés à un point commun dans le temps, le procédé comprenant en outre :
- la détermination (S2) d'un état de santé attendu du SFD et d'un état de santé attendu de l'EES qui sont associés au point commun dans le temps, les états de santé attendus étant basés sur les conditions d'utilisation historiques du SFD et de l'EES respectivement, et
- la commande du fonctionnement (S3) du SFD et de l'EES sur la base d'un écart (AFCS) entre l'état de santé réel et l'état de santé attendu du SFD et de l'EES respectivement, de telle sorte que, lorsque l'état de santé réel du SFD est pire que son état de santé attendu et que l'état de santé réel de l'EES est meilleur que son état de santé attendu, le SFD fonctionne avec des contraintes douces.

2. Procédé selon la revendication 1, dans lequel le fonctionnement du FCS avec des contraintes douces comprend le fonctionnement du FCS avec une dynamique de fonctionnement plus faible et/ou une fenêtre de fonctionnement plus étroite de sorte que l'utilisation de l'EES augmente.

3. Procédé selon l'une quelconque des revendications précédentes, comprenant en outre la commande du fonctionnement du FCS et de l'EES sur la base de l'écart entre l'état de santé réel et l'état de santé attendu du FCS et de l'EES respectivement, de telle sorte que, lorsque l'état de santé réel du SFD est meilleur que son état de santé attendu et que l'état de santé réel de l'EES est pire que son état de santé attendu, le FCS fonctionne avec des contraintes strictes.

4. Procédé selon la revendication 3, dans lequel le fonctionnement du FCS avec des contraintes strictes comprend le fonctionnement du FCS avec une dynamique de fonctionnement plus élevée et/ou une fenêtre de fonctionnement plus large de sorte que l'utilisation de l'EES diminue.

5. Procédé selon l'une quelconque des revendications précédentes, dans lequel l'un du FCS et de l'EES est un système préféré prédéterminé par rapport à l'autre système, le procédé comprenant en outre la commande du fonctionnement du FCS et de l'EES sur la base de l'écart entre l'état de santé réel et l'état de santé attendu du FCS et de l'EES respectivement, de telle sorte que, lorsque l'état de santé réel du SFD est pire que son état de santé attendu et que l'état de santé réel de l'EES est pire que son état de santé attendu, le SFD fonctionne avec un ensemble de contraintes d'exploitation de sorte que la dégradation du système préféré prédéterminé diminue.

6. Procédé selon l'une quelconque des revendications précédentes, dans lequel les conditions d'utilisation historiques du FCS sont indicatives d'au moins l'un des éléments suivants :
- puissance de sortie du FCS pendant le fonctionnement,
- fréquence des cycles d'alimentation du FCS pendant le fonctionnement,
- conditions de température ambiante pendant le fonctionnement,
- conditions de l'air ambiant pendant le fonctionnement, telles que le niveau de pollution,
- conditions météorologiques ambiantes pendant le fonctionnement,
- historique de démarrage/arrêt,
- historique de la température du liquide de refroidissement dans le FCS,
- temps de fonctionnement.

7. Procédé selon l'une quelconque des revendications précédentes, dans lequel les conditions d'utilisation historiques de l'EES sont indicatives d'au moins l'un des éléments suivants :
- puissance de sortie de l'EES pendant le fonctionnement,
- conditions de température ambiante,
- conditions météorologiques ambiantes pendant le fonctionnement,
- cycle de puissance et débit d'énergie de l'EES pendant le fonctionnement.

8. Procédé selon l'une quelconque des revendications précédentes, dans lequel le procédé est mis à jour avec une fréquence de mise à jour prédéterminée, de telle sorte que la fréquence de mise à jour corresponde à un nombre prédéterminé d'heures de fonctionnement du FCS et/ou de l'EES.

9. Procédé selon la revendication 8, dans lequel la fréquence de mise à jour prédéterminée est variable, telle que variable par rapport à au moins l'une des conditions de température ambiante et des conditions météorologiques ambiantes.

10. Procédé selon l'une quelconque des revendications 8 à 9, dans lequel la fréquence de mise à jour prédéterminée est modifiée pendant le fonctionnement sur la base d'une amplitude de l'écart entre l'état de santé réel et l'état de santé attendu du FCS et/ou de l'EES, de telle sorte qu'un écart plus grand implique une fréquence de mise à jour plus élevée, et vice versa.

11. Unité de commande (110) pour commander le fonctionnement d'un système de pile à combustible, FCS, et d'un système de stockage d'énergie électrique, EES, l'unité de commande étant configurée pour exécuter les étapes du procédé selon l'une quelconque des revendications 1 à 10.

12. Système de propulsion (1) pour véhicule comprenant un système de pile à combustible, FCS, et un système de stockage d'énergie électrique, EES, et comprenant en outre une unité de commande selon la revendication 11.

13. Véhicule (100) comprenant un système de propulsion selon la revendication 12.

14. Programme informatique comprenant un moyen de code de programme pour exécuter les étapes de l'une quelconque des revendications 1 à 10 lorsque ledit programme est exécuté sur un ordinateur, tel que sur l'unité de commande selon la revendication 11.

15. Support lisible par ordinateur comportant un programme informatique comprenant un moyen de code de programme pour exécuter les étapes de l'une quelconque des revendications 1 à 10 lorsque ledit produit de programme est exécuté sur un ordinateur, tel que sur l'unité de commande de la revendication 11.
